# EUROPÄISCHE PATENTANMELDUNG

(11) **EP 4 131 577 A2**
(43) Veröffentlichungstag der Anmeldung: **08.02.2023**
(21) Anmeldenummer: 22187281.5
(22) Anmeldetag: 27.07.2022
(51) Int. Cl.: H01M 10/647, H01M 10/654, H01M 10/6557, H01M 10/6567, H01M 50/103

(54) **BATTERIEZELLE**

(30) Priorität: 06.08.2021 DE 102021120492
(71) Anmelder: VOLKSWAGEN AG, 38440 Wolfsburg (DE)
(72) Erfinder: Koch, Stephan Leonhard, 38239 Salzgitter (DE); Yurtseven, Mesut, 38226 Salzgitter (DE); Ebbighausen, Marius, 31718 Pollhagen (DE); Kunze, Miriam, 30926 Seelze (DE)
(74) Vertreter: karo IP

(57) **Zusammenfassung**

Batteriezelle (1), zumindest umfassend ein formfestes Gehäuse (2) und darin angeordnet einen Mehrzahl von aufeinander zumindest gestapelten Lagen (3), umfassend mindestens eine Anode und mindestens eine Kathode als Elektroden und zwischen den unterschiedlichen Elektroden einen Separator; wobei das Gehäuse (2) eine äußere Ummantelung (4) zur Ausbildung eines von dem Gehäuse (2) eingeschlossenen Volumens (5) sowie innerhalb des Volumens (5) eine mit der äußeren Ummantelung (4) verbundene Wärmetauscherplatte (6) umfasst, wobei die Wärmetauscherplatte (6) in einem Wärmeaustauschabschnitt (7) von einem Kühlfluid durchströmbar ist, wobei zumindest ein erster Anschluss (8) und ein zweiter Anschluss (9) für das Kühlfluid an mindestens einem ersten Anschlusselement (10) der Wärmetauscherplatte (6) angeordnet sind, das mit dem Wärmeaustauschabschnitt (7) einteilig verbunden ist und zumindest einen Teil der äußeren Ummantelung (4) bildet.

## Beschreibung

Die Erfindung betrifft eine Batteriezelle, zumindest umfassend ein formfestes Gehäuse und darin angeordnet mindestens eine Mehrzahl von aufeinander zumindest gestapelten Lagen, umfassend mindestens eine Anode und mindestens eine Kathode als Elektroden und zwischen den unterschiedlichen Elektroden einen Separator. Die Lagen bilden mindestens einen Stapel.

Die zumindest gestapelten, ggf. zusätzlich gewickelten bzw. gefalteten, Kathoden, Anoden und Separatoren bilden insbesondere einen Stapel. Jede Elektrode ist mit einem sich aus dem Stapel nach außen erstreckenden Ableiter verbunden, so dass ein elektrischer Strom aus dem Stapel ab- oder dem Stapel zugeführt werden kann. Die Ableiter der Anoden und die Ableiter der Kathoden werden jeweils miteinander verbunden, um die jeweiligen Elektroden elektrisch parallel zu verschalten. In der Batteriezelle können auch mehrere Stapel angeordnet sein.

Für den Antrieb von Kraftfahrzeugen werden vermehrt Batterien, insbesondere Lithium-Ionen-Batterien eingesetzt. Batterien werden üblicherweise aus Batteriezellen und/ oder aus mehrere Batteriezellen umfassenden Batteriemodulen zusammengesetzt.

Aus der nachveröffentlichten DE 10 2021 112 444.1 ist eine Batteriezelle, zumindest umfassend ein Gehäuse und darin angeordnet mindestens einen Block Aktivmaterial, bekannt. Der Block Aktivmaterial weist eine Mehrzahl von aufeinander zumindest gestapelten Lagen auf. Das Gehäuse umfasst ein Mantelteil mit einer offenen ersten Stirnseite und einer offenen zweiten Stirnseite, das den mindestens einen Block Aktivmaterial entlang einer Umfangsrichtung vollumfänglich umschließt, sowie ein einteilig ausgeführtes Kernteil. Das Kernteil weist ein an der ersten Stirnseite angeordnetes und mit dem Mantelteil verbundenes Bodenteil und ein entlang einer axialen Richtung beabstandet dazu an der zweiten Stirnseite angeordnetes und mit dem Mantelteil verbundenes Deckelteil auf, sowie ein das Bodenteil mit dem Deckelteil verbindendes Mittelteil. Der mindestens eine Block Aktivmaterial ist auf einer ersten Seite des Mittelteils entlang einer radialen Richtung zwischen dem Mantelteil und dem Mittelteil sowie auf einer, der ersten Seite gegenüberliegenden zweiten Seite des Mittelteils zwischen dem Mantelteil und dem Mittelteil angeordnet. Das Kernteil ist ein Strangpressprofil.

Diese Bauart einer Batteriezelle ermöglicht eine effektive Ausnutzung eines Bauraums, es wird also ein hoher Wert für diesen Parameter in Wh/l [Watt-Stunde pro Liter] erreicht.

Weiterhin ist eine Anbindung der Zelle an die Kühlung im System sehr wichtig. Ein direkter Kühlpfad zwischen den Stapeln bzw. dem Block Aktivmaterial zu einer Systemkühlung ist in aktuellen Bauformen nicht vorhanden. Durch das in der DE 10 2021 112 444.1 vorgeschlagene, als Strangpressprofil ausgeführte Kernteil kann in dem Gehäuse entstehende Wärme einfach abgeführt werden.

Aus der CN 109962312 A ist eine Batteriezelle mit einer Wärmetauscherplatte bekannt. Die Wärmetauscherplatte ist innerhalb der Batteriezelle bzw. zwischen den Lagen der Batteriezelle angeordnet. Die Wärmetauscherplatte kann von einem Kühlfluid durchströmt werden. Entsprechende Anschlüsse erstrecken sich über das Gehäuse nach außen.

Aus der WO 2020/007561 A1 ist eine prismatische Batteriezelle bekannt. Eine der Gehäusewände bildet eine in den Gehäuseinnenraum hineinragende Temperierrippe auf, an der ein Heizelement angeordnet ist. Die Temperierrippe kann durch Strangpressen hergestellt sein.

Aufgabe der vorliegenden Erfindung ist es, die mit Bezug auf den Stand der Technik angeführten Probleme zumindest teilweise zu lösen. Insbesondere soll eine Batteriezelle vorgeschlagen werden, die kostengünstig herstellbar ist, eine effektive Raumnutzung des Gehäuses ermöglicht und eine verbesserte Temperierung der Batteriezelle bzw. der in dem Gehäuse angeordneten Stapel gewährleistet.

Zur Lösung dieser Aufgaben trägt eine Batteriezelle mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Batteriezelle vorgeschlagen, zumindest umfassend ein formfestes Gehäuse und darin angeordnet eine Mehrzahl von aufeinander zumindest gestapelten Lagen, umfassend mindestens eine Anode und mindestens eine Kathode als Elektroden und zwischen den unterschiedlichen Elektroden einen Separator. Das Gehäuse umfasst eine äußere Ummantelung zur Ausbildung eines von dem Gehäuse eingeschlossenen Volumens sowie innerhalb des Volumens eine mit der äußeren Ummantelung verbundene Wärmetauscherplatte. Die Wärmetauscherplatte ist in einem Wärmeaustauschabschnitt von einem Kühlfluid durchströmbar. Zumindest ein erster Anschluss und ein zweiter Anschluss für das Kühlfluid sind an mindestens einem ersten Anschlusselement der Wärmetauscherplatte angeordnet, das mit dem Wärmeaustauschabschnitt einteilig verbunden ist und zumindest einen Teil der äußeren Ummantelung bildet.

Die zumindest gestapelten, ggf. zusätzlich gewickelten bzw. gefalteten, Kathoden, Anoden und Separatoren bilden insbesondere einen Stapel. Die Elektroden weisen Aktivmaterialien insbesondere als Beschichtungen auf elektrisch leitenden Trägermaterialien auf, die insbesondere als Ableiter dienen. Die Anode, die Kathode und der Separator werden jeweils als Lage bezeichnet. Die Lagen können als Einzelblattstapel, Laminierung, Z-Faltung, Jelly Roll angeordnet sein, jeweils in beliebiger Anzahl.

Jede Elektrode ist mit einem sich aus dem Stapel nach außen erstreckenden Ableiter verbunden, so dass ein elektrischer Strom aus dem Stapel ab- oder dem Stapel zugeführt werden kann. Die Ableiter der Anoden und die Ableiter der Kathoden werden jeweils miteinander verbunden, um die jeweiligen Elektroden elektrisch parallel zu verschalten. In der Batteriezelle können auch mehrere Stapel angeordnet sein.

Die Elektroden sind insbesondere in bekannter Weise zur Bildung des Stapels angeordnet und werden von einem Elektrolyten bzw. einer Elektrolytflüssigkeit beaufschlagt.

Die Elektroden sind insbesondere folienartig ausgeführt, weisen also eine große Seitenfläche und eine geringe Dicke auf. Auf der Seitenfläche bzw. auf jeder Seitenfläche der Elektrode ist insbesondere eine Beschichtung mit Aktivmaterial angeordnet. Die Separatoren sind jeweils zwischen den Seitenflächen der benachbart angeordneten unterschiedlichen Elektroden angeordnet. Insbesondere erstrecken sich unbeschichtete Teile der Elektroden als Ableiter aus dem Stapel heraus.

Insbesondere sind jeweils die Anoden und die Kathoden innerhalb des Stapels miteinander parallelgeschaltet, so dass die Ableiter einer Mehrzahl von Anoden miteinander elektrisch leitend verbunden sind und die Ableiter einer Mehrzahl von Kathoden miteinander elektrisch leitend verbunden sind.

Das Gehäuse der Batteriezelle ist insbesondere nur plastisch verformbar. Das Gehäuse wird auch als Hardcase bezeichnet und die Batteriezelle z. B. als eine prismatische Zelle.

Die Batteriezelle ist insbesondere eine lithiumhaltige Batteriezelle, insbesondere eine Sekundärzelle, also eine wiederaufladbare Batteriezelle.

Das Gehäuse ist bei der einsatzbereiten Batteriezelle insbesondere einteilig ausgeführt. Das Gehäuse bzw. die das Volumen umschließende Ummantelung setzt sich aus dem mindestens einen (zumindest ersten oder zusätzlich zweiten) Anschlusselement der Wärmetauscherplatte zusammen und weiteren die Ummantelung bildenden Bauteilen, die erst im Rahmen der Herstellung des Gehäuses miteinander verbunden werden, vorher aber getrennt voneinander vorliegen. Anschlusselement(-e) und Wärmetauscherplatte bilden insbesondere eine Vormontagegruppe, die dann mit den weiteren Bauteilen zur Ummantelung verbunden werden.

Der Wärmeaustauschabschnitt ist insbesondere innerhalb des Volumens angeordnet und insbesondere auf beiden (größten) Seiten benachbart zu mindestens einem Stapel angeordnet. Der Wärmeaustauschabschnitt ist insbesondere zumindest teilweise als Hohlraum ausgeführt, so dass ein Kühlfluid über den ersten Anschluss in den Hohlraum hinein und über den zweiten Anschluss aus dem Hohlraum hinaus in eine Umgebung der Batteriezelle strömen kann. Insbesondere ist innerhalb des Wärmeaustauschabschnitts eine Kanalstruktur angeordnet, so dass das Kühlfluid entlang der Kanalstruktur den Wärmeaustauschabschnitt durchströmen kann.

Insbesondere kann die Batteriezelle bzw. kann der mindestens eine Stapel über den Wärmeaustauschabschnitt temperiert, also gekühlt oder falls erforderlich, erwärmt werden.

Insbesondere sind der Wärmeaustauschabschnitt und das mindestens eine erste (und ggf. zweite) Anschlusselement einteilig als Druckgussteil, als Strangpressprofil oder als Schweißkonstruktion ausgeführt.

Bei dem Verfahren Strangpressen wird ein Ausgangsmaterial auf eine Umformtemperatur erhitzt und mit hohem Druck durch eine formgebende Matrize gedrückt. Das so entstehende Profil wird aus der Matrize entlang einer Vorschubrichtung weiterbewegt.

Bei dem Verfahren Druckguss wird ein flüssiges Ausgangsmaterial in ein Formnegativ eingeleitet und nach Erstarrung entformt.

Insbesondere wird die Batteriezelle gemäß der DE 10 2021 112 444.1 so verändert, dass das dort vorgeschlagene Kernteil nun als von einem Kühlfluid durchströmbar ausgeführt ist. Insbesondere können so ggf. vorhandene, starke Temperaturgradienten von Anbindung Kühlung (z. B. über eine Gehäusefläche) zu Hotspot (z. B. am elektrischen Kontakt, über den die Batteriezelle mit einem außerhalb der Batteriezelle angeordneten Stromkreis verbunden ist) so wesentlich minimiert werden. Insbesondere für Systeme mit großer Leistungsdichte und Zellchemien mit großem Innenwiderstand, z. B. bei Festkörperbatterien, ist das sehr relevant.

Eine Anbindung einer Seitenfläche des Gehäuses an eine Kühlung kann so insbesondere entfallen oder konstruktiv stark vereinfacht werden, wenn das Gehäuse über den Wärmeaustauschabschnitt innerhalb des Volumens gekühlt wird und an mindestens einer Seitenfläche des Gehäuses die Anschlüsse für das Kühlfluid angeordnet sind. Damit kann z. B. die Höhe der Batteriezelle weiter verringert werden, so dass die Raumausnutzung weiter verbessert wird.

Die Anordnung eines Wärmeaustauschabschnitts innerhalb des Volumens kann insbesondere auch die Systemsicherheit bei Kühlerbruch verbessern, da das Kühlfluid nicht in ein Modulgehäuse, in dem eine Vielzahl von Batteriezellen angeordnet sind, austritt, sondern im Wesentlichen in den einzelnen Gehäusen der Batteriezellen verbleibt.

Infolge des erhöhten Platzbedarfs und des erhöhten Gewichts des Wärmeaustauschabschnitts innerhalb des Volumens sinkt die Energiedichte (volumetrisch sowie gravimetrisch) auf der Ebene der Batteriezelle. Auf Modulebene (also wenn mehrere Batteriezellen betrachtet werden) gleicht sich das durch die Einsparungen im Batteriemodul jedoch wieder aus.

Mit der Ausgestaltung der Temperierung in dem Wärmeaustauschabschnitt muss auf Modulebene kein konstruktiver Mehraufwand getrieben werden. Alle Batteriezellen verhalten sich so, auch bei Zellchemieänderungen, auf Modulebene identisch. Eine Neuentwicklung bei Modellpflegen ist damit nicht erforderlich. Ebenso kann ein Modulkonzept mit verschiedenen Batteriezellen (low-cost vs. high-performance) identisch angewandt werden. Somit sinkt der Entwicklungsaufwand in einem diversen Portfolio substanziell.

Insbesondere sind der Wärmeaustauschabschnitt und das mindestens eine erste (und ggf. zweite) Anschlusselement einteilig als Druckgussteil, als Strangpressprofil oder als Schweißkonstruktion ausgeführt. Dabei ist es auch möglich, zwei Halbschalen zu fertigen und diese zu verbinden, z. B. durch Schweißen. Eine Herstellung durch additive Fertigungsverfahren, also z. B. durch dreidimensionalen Druck ist natürlich auch möglich.

Alternativ zur Fertigung eines Wärmeaustauschabschnitts mit Kanalstruktur kann auch ein möglichst großer Hohlraum in dem Wärmeaustauschabschnitt vorgesehen sein, der mit einem Aerogel mit einer Porosität von mindestens 80 % gefüllt wird. Aerogele sind hochporöse Festkörper, bei denen bis zu 99,98 % des Volumens aus Poren bestehen.

Das Aerogel ist ein poröses Medium, dass eine Stabilisierung der durch den Hohlraum geschwächten Seitenflächen des Wärmeaustauschabschnitts ermöglicht. Damit kann ein Zusammendrücken des Wärmeaustauschabschnitts verhindert werden, wenn innerhalb des Volumens z. B. ein hoher Druck herrscht (z. B. aufgrund von Swelling, also einer Ausdehnung des Aktivmaterials bzw. des mindestens einen Stapels). Aufgrund der hohen Porosität des Aerogels kann besonders viel Kühlfluid eingesetzt und dadurch effizient gekühlt werden. Das Kühlfluid wird über die Anschlüsse in den Wärmeaustauschabschnitt eingeleitet bzw. abgeführt und verteilt sich über die Poren durch das Aerogel.

Bei Einsatz eines Aerogels kann ggf. ein Wandstärke des Wärmeaustauschabschnitts ggf. über einer Ausgestaltung mit Kanalstruktur verringert werden. Eine Kanalstruktur ermöglicht allerdings eine gerichtete und besser verteilbare Durchströmung des Wärmeaustauschabschnitts.

Insbesondere umfasst die Ummantelung zumindest ein Mantelteil mit zumindest einer offenen ersten Stirnseite, das die Lagen und den Wärmeaustauschabschnitt entlang einer Umfangsrichtung vollumfänglich umschließt. Die erste Stirnseite ist zumindest teilweise durch das mindestens eine Anschlusselement verschlossen.

Das Mantelteil ist insbesondere zylindrisch ausgeführt, weist also nur zueinander parallel verlaufende Flächen auf. Die erste Stirnseite erstreckt sich insbesondere quer dazu. Das Mantelteil kann als Tiefziehteil ausgeführt sein, wobei beide Stirnseiten offen oder aber eine Stirnseite geschlossen ausgeführt sein kann.

Insbesondere umfasst das Mantelteil eine offene zweite Stirnseite, die durch mindestens ein zweites Anschlusselement, dass mit dem Wärmeaustauschabschnitt einteilig verbunden ist, zumindest teilweise verschlossen ist.

Die Stirnseiten liegen einander entlang einer axialen Richtung gegenüber. Die axiale Richtung verläuft insbesondere parallel zu der Erstreckung der zylindrischen Flächen des Mantelteils bzw. quer zur Erstreckung der ersten Stirnseite.

Die Anschlusselemente erstrecken sich, z. B. bei der Herstellung der Wärmetauscherplatte durch Strangpressen jeweils parallel zur Vorschubrichtung, und parallel zu der mindestens einen Stirnseite.

Die Anschlusselemente weisen in einer radialen Richtung, also quer zur axialen Richtung und quer zu einer größten Seite des Wärmeaustauschabschnitts, eine größere Breite als der Wärmeaustauschabschnitt auf, insbesondere um einen Faktor größer 3, bevorzugt größer 5.

Die Anschlusselemente erstrecken sich insbesondere senkrecht zum Wärmeaustauschabschnitts. Der Wärmeaustauschabschnitt weist eine Breite von 3 bis 15 Millimeter, insbesondere von höchstens 8 Millimeter, bevorzugt von höchstens 5 Millimetern, auf. Der Wärmeaustauschabschnitt weist, insbesondere parallel zur Breite des Wärmeaustauschabschnitts, eine geringste Wanddicke (also insbesondere eine Wandstärke eines Vollmaterials) von 0,2 bis 5 Millimeter, insbesondere von höchstens 3 Millimeter, bevorzugt von höchstens 2 Millimetern, auf). Die Anschlusselemente weisen insbesondere eine geringste Wanddicke auf, für die die Grenzen der Wanddicke des Wärmeaustauschabschnitts ebenfalls gelten. Die Wanddicke der einzelnen Teile kann aber voneinander unterschiedlich ausgeführt sein.

Die Breite der Anschlusselemente ist insbesondere so ausgeführt, dass sie die Erstreckung des mindestens einen Stapels entlang der radialen Richtung gerade überdeckt.

Das mindestens eine erste Anschlusselement umfasst insbesondere den mindestens einen Anschluss. Dieser ist insbesondere in Form einer Durchführung für das Kühlfluid und ggf. mit einer Anschlussgeometrie für eine das Kühlfluid führende Leitung an dem ersten Anschlusselement ausgeführt. Es können mehrere Anschlüsse an einem ersten Anschlusselement angeordnet sein.

Das mindestens eine zweite Anschlusselement umfasst insbesondere keinen Anschluss. Insbesondere umfasst das zweite Anschlusselement eine vollständig geschlossene Oberfläche, so dass damit eine Stirnseite auch vollständig (und ohne Durchführung für einen Anschluss) verschließbar ist.

Als Material zumindest für den Wärmeaustauschabschnitt und die Anschlusselemente kann insbesondere Aluminium bzw. eine Aluminiumlegierung oder aber auch andere Werkstoffe eingesetzt werden. Dabei sollte das eingesetzte Material insbesondere eine gute Wärmeleitfähigkeit, bevorzugt vergleichbar oder höher als die Wärmleitfähigkeit von Aluminium, aufweisen.

Insbesondere wird der mindestens eine Stapel so angeordnet, dass sich die Lagen im Bereich der Seiten des Wärmeaustauschabschnitts jeweils parallel zu den Seiten erstrecken. Ist nur ein Stapel vorgesehen, können die Lagen um den Wärmeaustauschabschnitt herum gewickelt angeordnet sein. Sind zwei Stapel vorgesehen, kann jeder Stapel benachbart zu der jeweiligen Seite angeordnet sein.

Zur Herstellung der Batteriezelle wird insbesondere zunächst die Wärmetauscherplatte bereitgestellt. Der mindestens eine Stapel wird an dem Wärmeaustauschabschnitt der Wärmetauscherplatte, insbesondere zwischen den Stirnseiten, angeordnet.

Der mindestens eine Stapel kann von einer elektrischen Isolierung eingefasst sein.

Der mindestens eine Stapel kann insbesondere über eine Art Klammer an dem Wärmeaustauschabschnitt angeordnet werden. Die Klammer kann den mindestens einen Stapel außen umfassen und so eine Breite des mindestens einen Stapels fixieren. Die Breite verläuft quer zu den Seiten des Wärmeaustauschabschnitts. Insbesondere ist der mindestens eine Stapel so an dem Wärmeaustauschabschnitt angeordnet, dass er entlang der axialen Richtung fluchtend zu dem mindestens einen Anschlusselement angeordnet ist.

Die Wärmetauscherplatte kann zusammen mit dem mindestens einen Stapel (insbesondere zusammen mit einer Isolierung) in das Mantelteil eingeschoben werden, insbesondere entlang der axialen Richtung.

Das mindestens eine Anschlusselement kann an der jeweiligen Stirnseite mit dem Mantelteil verbunden werden, bevorzugt stoffschlüssig, z. B. durch Schweißen. Insbesondere kann das Anschlusselement zumindest an mit dem Mantelteil ausgebildeten Kontaktstellen an der jeweiligen Stirnseite mit dem Mantelteil verbunden werden. Damit kann eine zumindest flüssigkeitsdichte, ggf. auch gasdichte Verbindung zwischen Mantelteil und Anschlusselement hergestellt werden.

Das Gehäuse ist insbesondere quaderförmig ausgebildet. Die sich parallel zu den Seiten des Wärmeaustauschabschnitts erstreckenden Seitenflächen des Gehäuses weisen dabei die größten Flächen auf und werden insbesondere durch das Mantelteil gebildet. Die erste und zweite Stirnseite, an denen mindestens ein Anschlusselement angeordnet ist, können die Seitenflächen mit den jeweils kleineren Flächen bilden.

Insbesondere deckt das mindestens eine erste Anschlusselement mindestens 10 %, bevorzugt mindestens 20 %, der Stirnseite ab, an der es angeordnet ist.

Insbesondere verläuft eine Längsrichtung, insbesondere die Vorschubrichtung beim Strangpressen der Wärmetauscherplatte, senkrecht zur axialen Richtung und parallel zu den Seiten des Wärmeaustauschabschnitts.

Insbesondere verläuft eine Längsrichtung parallel zu dem Wärmeaustauschabschnitt und parallel zu der ersten Stirnseite und/oder zweiten Stirnseite. Die Ummantelung ist an zumindest einer der Stirnseiten durch mindestens zwei voneinander entlang der Längsrichtung beabstandete Anschlusselemente gebildet, wobei zwischen den Anschlusselementen ein Zwischenraum ausgebildet ist.

Insbesondere sind zumindest an der ersten Stirnseite oder an der zweiten Stirnseite zwei Zwischenräume ausgebildet. Insbesondere sind die Zwischenräume entlang der Längsrichtung, insbesondere durch ein Anschlusselement, voneinander beabstandet angeordnet.

Insbesondere ist zumindest ein elektrischer Kontakt der Batteriezelle in einem Zwischenraum angeordnet.

In jedem Zwischenraum kann mindestens ein elektrischer Kontakt angeordnet sein, über den die in dem Volumen angeordneten Stapel mit einem außerhalb des Gehäuses angeordneten Stromkreis verbindbar sind. Insbesondere sind in jedem Zwischenraum ein Kontakt oder mehrere Kontakte angeordnet.

Infolge der Bereitstellung mehrerer Kontakte (also mehrerer Kontakte eines Pols) kann der Innenwiderstand verringert werden.

Ein Zwischenraum kann insbesondere durch mechanische Bearbeitung aus dem Anschlusselement bzw. aus der Wärmetauscherplatte herausgearbeitet werden (z. B. bei Ausführung der Wärmetauscherplatte als Strangpressprofil) oder direkt darin vorgesehen sein (z. B. bei Ausführung der Wärmetauscherplatte als Druckgussteil oder als Schweißkonstruktion). Insbesondere weist die Wärmetauscherplatte nach dem Strangpressen keine Zwischenräume auf.

Insbesondere erstreckt sich das jeweilige Anschlusselement entlang der Längsrichtung über den Wärmeaustauschabschnitt hinaus. Insbesondere können sich so die Lagen eines Stapels von einer Seite des Wärmeaustauschabschnitts hin zur anderen Seite des Wärmeaustauschabschnitts erstrecken, insbesondere durch Wickeln der Lagen entlang der Umfangsrichtung um den Wärmeaustauschabschnitt. Die Erstreckung des jeweiligen Anschlusselements entlang der Längsrichtung ist insbesondere so ausgeführt, dass sie die Erstreckung des mindestens einen Stapels entlang der Längsrichtung gerade überdeckt.

Insbesondere ist zumindest eine Stirnseite ausschließlich durch nur ein Anschlusselement verschlossen. In diesem Fall bildet das eine Anschlusselement z. B. eine komplette Stirnseite der Ummantelung aus.

Insbesondere ist das zumindest eine Anschlusselemente stoffschlüssig mit dem Mantelteil verbunden.

Mit der Verbindung von Wärmetauscherplatte und Mantelteil ist das Gehäuse der Batteriezelle insbesondere hergestellt. Das Gehäuse ist, bei stoffschlüssiger Verbindung von Wärmetauscherplatte und Mantelteil, insbesondere einteilig ausgeführt, aber dabei immer aus zumindest zwei Teilen, nämlich aus Wärmetauscherplatte und Mantelteil, hergestellt.

Insbesondere ist das Mantelteil ein Strangpressprofil. Die in Bezug auf die Wärmetauscherplatte vorliegenden Ausführungen zu dem Strangpressverfahren und den Materialstärken gelten hier insbesondere entsprechend.

Insbesondere ist die Ummantelung an den Stirnseiten vergleichbar, ggf. sogar identisch ausgeführt und weist jeweils mindestens einen Zwischenraum oder zwei Zwischenräume, ggf. sogar mehr, auf. Alternativ weist die Wärmetauscherplatte im Bereich zumindest einer Stirnseite mindestens zwei Zwischenräume auf, während sie im Bereich der anderen Stirnseite geschlossen (ohne Zwischenraum, also als durchgehendes Anschlusselement) ausgeführt ist. Ebenso können die Stirnseiten aber auch unterschiedliche Anzahlen von Zwischenräumen aufweisen, also keinen, einen, zwei oder sogar mehr.

Die mindestens zwei elektrischen Kontakte der Batteriezelle können an einer Stirnseite oder auf die zwei Stirnseiten verteilt angeordnet sein.

Es können an jeder Stirnseite, oder aber an nur einer der Stirnseiten, auch mehrere elektrische Kontakte angeordnet sein. Dabei können an einer Stirnseite gleichartige oder unterschiedliche Kontakte angeordnet sein.

Die hier beschriebene Batteriezelle mit Wärmetauscherplatte kann insbesondere vergleichbare Abmessungen (zumindest in zwei von drei Raumdimensionen, bevorzugt in allen Raumdimensionen) wie eine übliche Pouchzelle mit verformbarem Gehäuse oder eine bekannte prismatische Batteriezelle, die keine Wärmetauscherplatte aufweist, aufweisen. Insbesondere sind die elektrischen Kontakte in nahezu beliebiger Konfiguration an dem Gehäuse anordenbar, so dass eine Adaption der vorgeschlagenen Batteriezelle an für bekannte Batteriezellen vorgesehene Anordnungen in einfacher Weise möglich ist.

Auch die Anschlüsse für das Kühlfluid können in nahezu beliebiger Konfiguration an dem Gehäuse angeordnet werden.

Insbesondere ist der jeweilige elektrische Kontakt gegenüber dem Gehäuse elektrisch isoliert. Z. B. kann der elektrische Kontakt einen metallischen Rahmen aufweisen, der mit dem Gehäuse, z. B. stoffschlüssig, verbindbar ist bzw. verbunden werden kann. Die elektrische Kontaktierung des Stapels erfolgt insbesondere über einen elektrischen Leiter, der sich von dem Stapel durch den elektrischen Kontakt hin zu der Umgebung der Batteriezelle erstreckt. Der elektrische Kontakt ist insbesondere gegenüber dem metallischen Rahmen elektrisch isoliert angeordnet, z. B. über eine Kontaktisolierung.

Der Kontakt ist insbesondere gegenüber dem mindestens einen Stapel durch eine Stapelisolierung elektrisch isoliert angeordnet. Insbesondere kann zumindest ein Kontakt auch gegenüber dem Gehäuse nicht isoliert angeordnet sein, so dass das Gehäuse ein elektrisches Potential aufweist.

Insbesondere ist zumindest eine Elektrode des mindestens einen Stapels mit einem, in einem Zwischenraum angeordneten, ersten Kontakt oder mit einem, in einem anderen Zwischenraum angeordneten, zweiten Kontakt über einen sich nur im Bereich des Zwischenraums aus dem Stapel heraus erstreckenden Ableiter elektrisch leitend verbunden.

Insbesondere erstrecken sich die Ableiter also nur dort aus dem Stapel bzw. der Isolierung des Stapels heraus, wo der Zwischenraum bzw. wo der mit den Ableitern zu kontaktierende elektrische Kontakt bzw. elektrische Leiter angeordnet ist. Damit muss ein sonst erforderlicher, für die Ableiter freizuhaltender Raum zwischen dem Stapel und der Stirnseite bzw. der Ummantelung nur im Bereich des Kontakts freigehalten werden. Da in diesem Bereich der Zwischenraum vorliegt, also gerade kein Anschlusselement, kann das mindestens eine Anschlusselement direkt auf dem Stapel, also ohne vorzuhaltenden Spalt, angeordnet werden. Der jeweilige Kontakt kann den für die Kontaktierung erforderlichen Bauraum zwischen Ableiter(-n) und Kontakt aufweisen, bzw. so angeordnet werden, dass dieser Bauraum vorliegt.

Insbesondere sind alle Ableiter einer Elektrodenart, also der Anode oder der Kathode, mit dem einen der beiden Kontakte verbunden. Bevorzugt sind alle Ableiter der anderen Elektrodenart mit dem anderen der beiden Kontakte verbunden.

Der mindestens eine Stapel erstreckt sich insbesondere über mehr als 95 %, bevorzugt über mehr als 98 %, besonders bevorzugt über mehr als 99 %, einer sich entlang der axialen Richtung erstreckenden geringsten Höhe zwischen den Anschlusselementen bzw. den Stirnseiten der Ummantelung. Insbesondere weist der Stapel ein Untermaß von höchstens 1 Millimeter, bevorzugt von höchstens 0,5 Millimeter gegenüber der geringsten Höhe auf. Insbesondere kontaktiert der mindestens eine Stapel die Ummantelung an den Stirnseiten gleichzeitig.

Dieses geringe Untermaß ist möglich, weil durch das Strangpressen, insbesondere bei nach dem Strangpressen kalibrierten Bauteilen, sehr hohe Genauigkeiten erzielt werden können. Es ist also seitens des Stapels oder bei der Gestaltung des Gehäuses kein Spiel vorzuhalten, um eine spätere Passung bei der Anordnung des Stapels in dem Gehäuse, wie z. B. bei tiefgezogenen Gehäuse-Bauteilen, zu gewährleisten.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend. Soweit hier eine Mehrzahl von Bauteilen angesprochen ist, umfasst dies auch mehr als zwei Bauteile.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Batteriezelle in einer Explosionsdarstellung in perspektivischer Ansicht;
- Fig. 2:: ein Kernteil gemäß der DE 10 2021 112 444.1 und eine Wärmetauscherplatte, jeweils in perspektivischer Ansicht; und
- Fig. 3:: eine Wärmetauscherplatte, jeweils in perspektivischer Ansicht.

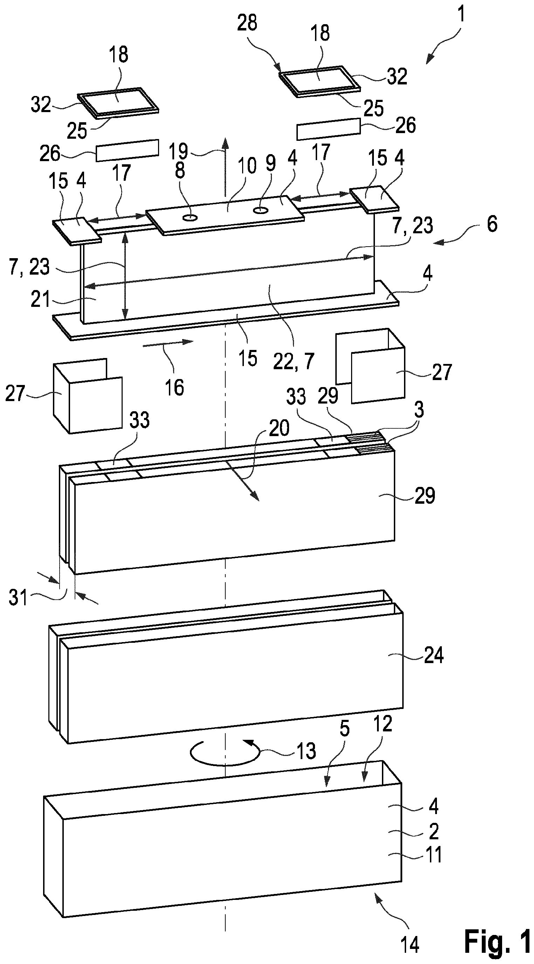

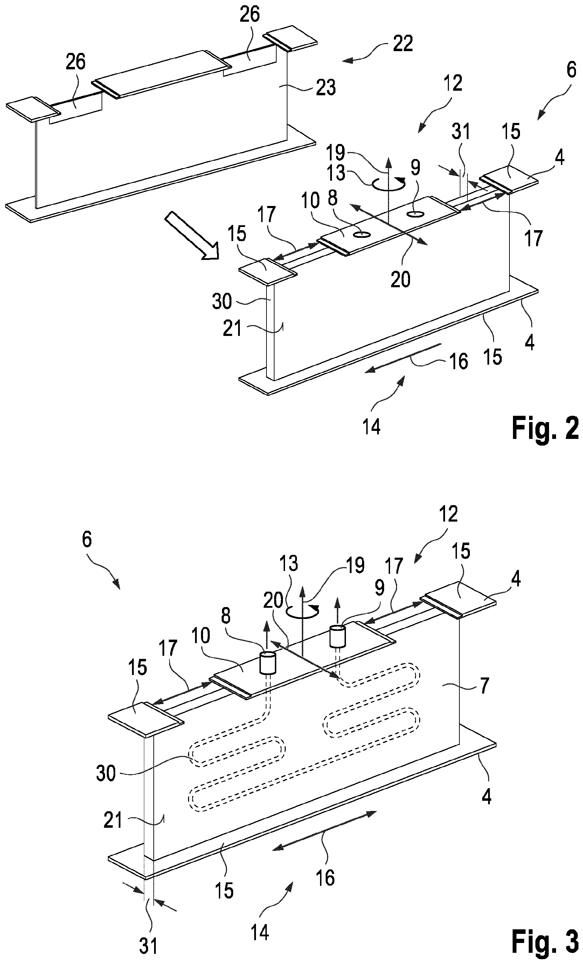

Fig. 1 zeigt eine Batteriezelle 1 in einer Explosionsdarstellung in perspektivischer Ansicht. Fig. 2 zeigt ein Kernteil 22 gemäß der DE 10 2021 112 444.1 und eine Wärmetauscherplatte 6, jeweils in perspektivischer Ansicht. Fig. 3 zeigt eine Wärmetauscherplatte 6, jeweils in perspektivischer Ansicht. Die Fig. 1 bis 3 werden im Folgenden gemeinsam beschrieben.

Die Batteriezelle 1 umfasst ein formfestes Gehäuse 2 und darin angeordnet zwei Stapel 29 mit jeweils einer Mehrzahl von aufeinander zumindest gestapelten Lagen 3, umfassend mindestens eine Anode und mindestens eine Kathode als Elektroden und zwischen den unterschiedlichen Elektroden einen Separator. Das Gehäuse 2 umfasst eine äußere Ummantelung 4 zur Ausbildung eines von dem Gehäuse 2 eingeschlossenen Volumens 5 sowie innerhalb des Volumens 5 eine mit der äußeren Ummantelung 4 verbundene Wärmetauscherplatte 6. Die Wärmetauscherplatte 6 ist in einem Wärmeaustauschabschnitt 7 von einem Kühlfluid durchströmbar. Ein erster Anschluss 8 und ein zweiter Anschluss 9 für das Kühlfluid sind an einem ersten Anschlusselement 10 der Wärmetauscherplatte 6 angeordnet, das mit dem Wärmeaustauschabschnitt 7 einteilig verbunden ist und zumindest einen Teil der äußeren Ummantelung 4 bildet.

Das Gehäuse 2 ist bei der einsatzbereiten Batteriezelle 1 einteilig ausgeführt. Das Gehäuse 2 bzw. die das Volumen 5 umschließende Ummantelung 4 setzt sich aus dem einen ersten Anschlusselement 10 und mehreren zweiten Anschlusselementen 15 der Wärmetauscherplatte 6 zusammen und weiteren die Ummantelung 4 bildenden Bauteilen (z. B. den Kontakten 18), die erst im Rahmen der Herstellung des Gehäuses 2 miteinander verbunden werden, vorher aber getrennt voneinander vorliegen. Anschlusselemente 10, 15 und Wärmetauscherplatte 6 bilden eine Vormontagegruppe, die dann mit den weiteren Bauteilen zur Ummantelung 4 verbunden werden.

Der Wärmeaustauschabschnitt 7 ist innerhalb des Volumens 5 angeordnet und mit den beiden größten Seiten 21 benachbart zu dem jeweiligen Stapel 29 angeordnet. Der Wärmeaustauschabschnitt 7 ist zumindest teilweise als Hohlraum 30 ausgeführt, so dass ein Kühlfluid über den ersten Anschluss 8 in den Hohlraum 30 (Kanalstruktur, siehe Fig. 3) hinein und über den zweiten Anschluss 9 aus dem Hohlraum 30 hinaus in eine Umgebung der Batteriezelle 1 strömen kann.

Die Batteriezelle 1 gemäß der DE 10 2021 112 444.1 wird so verändert, dass das dort vorgeschlagene Kernteil 22 nun als von einem Kühlfluid durchströmbar ausgeführt ist. Damit können ggf. vorhandene, starke Temperaturgradienten von Anbindung Kühlung (z. B. über eine Gehäusefläche) zu Hotspot (z. B. am elektrischen Kontakt 18, über den die Batteriezelle 1 mit einem außerhalb der Batteriezelle 1 angeordneten Stromkreis verbunden ist) so wesentlich minimiert werden. Dafür ist das Mittelteil 23 des Kernteils 22 nun als Wärmeaustauschabschnitt 7 mit einer größeren Breite 31 ausgeführt.

Die Ummantelung 4 umfasst ein Mantelteil 11 mit einer offenen ersten Stirnseite 12, das die Lagen 3 und den Wärmeaustauschabschnitt 7 entlang einer Umfangsrichtung 13 vollumfänglich umschließt. Die erste Stirnseite 12 ist teilweise durch die Anschlusselemente 10, 15 verschlossen. Das Mantelteil 11 ist zylindrisch ausgeführt, weist also nur zueinander parallel verlaufende Flächen auf. Die erste Stirnseite 12 erstreckt sich quer dazu. Das Mantelteil 11 umfasst eine offene zweite Stirnseite 14, die durch ein zweites Anschlusselement 15, dass mit dem Wärmeaustauschabschnitt 7 einteilig verbunden ist, vollständig verschlossen ist.

Die Stirnseiten 12, 14 liegen einander entlang einer axialen Richtung 19 gegenüber. Die axiale Richtung 19 verläuft parallel zu der Erstreckung der zylindrischen Flächen des Mantelteils 11 bzw. quer zur Erstreckung der Stirnseiten 12, 14.

Die Anschlusselemente 10, 15 erstrecken sich, z. B. bei der Herstellung der Wärmetauscherplatte 6 durch Strangpressen jeweils parallel zur Vorschubrichtung, und parallel zu den Stirnseiten 12, 14.

Die Anschlusselemente 10, 15 weisen in einer radialen Richtung 20, also quer zur axialen Richtung 19 und quer zu den größten Seiten 21 des Wärmeaustauschabschnitts 7, eine größere Breite 31 als der Wärmeaustauschabschnitt 7 auf. Die Anschlusselemente 10, 15 erstrecken sich senkrecht zum Wärmeaustauschabschnitt 7.

Die Breite der Anschlusselemente 10, 15 ist so ausgeführt, dass sie die Erstreckung der Stapel 29 entlang der radialen Richtung 20 gerade überdeckt.

Das erste Anschlusselement 10 umfasst den ersten Anschluss 8 und den zweiten Anschluss 9. Die Anschlüsse 8, 9 sind in Form einer Durchführung für das Kühlfluid und mit einer Anschlussgeometrie für eine das Kühlfluid führende Leitung an dem ersten Anschlusselement 10 ausgeführt.

Die zweiten Anschlusselemente 15 umfassen keine Anschlüsse 8, 9. Die zweiten Anschlusselemente 15 weisen jeweils eine vollständig geschlossene Oberfläche auf, so dass damit die zweite Stirnseite 14 vollständig (und ohne Durchführung für einen Anschluss 8, 9) verschlossen ist.

Die Stapel 29 sind so angeordnet, dass sich die Lagen 3 im Bereich der Seiten 21 des Wärmeaustauschabschnitts 7 jeweils parallel zu den Seiten 21 erstrecken.

Zur Herstellung der Batteriezelle 1 wird insbesondere zunächst die Wärmetauscherplatte 6 bereitgestellt. Die Stapel 29 werden an dem Wärmeaustauschabschnitt 7 der Wärmetauscherplatte 6 zwischen den Stirnseiten 12, 14 angeordnet. Jeder Stapel 29 ist von einer elektrischen Isolierung 24 eingefasst.

Die Stapel 29 werden über eine Art Klammer 27 an dem Wärmeaustauschabschnitt 7 angeordnet. Die Klammer 27 umfasst die Stapel 29 außen und fixiert so eine sich entlang der radialen Richtung 20 erstreckende Breite 31 der Stapel 29. Die Breite verläuft quer zu den Seiten 21 des Wärmeaustauschabschnitts 7. Die Stapel 29 sind so an dem Wärmeaustauschabschnitt 7 angeordnet, dass sie entlang der axialen Richtung 19 fluchtend zu den Anschlusselementen 10. 15 angeordnet sind.

Die Wärmetauscherplatte 6 wird zusammen mit den Stapeln 29 und zusammen mit der Isolierung 24 in das Mantelteil 11 entlang der axialen Richtung 19 eingeschoben.

Die Anschlusselemente 10, 15 sind an der jeweiligen Stirnseite 12, 14 mit dem Mantelteil 11 über eine Schweißnaht 28 verbunden. Das Gehäuse 2 ist quaderförmig ausgebildet. Die sich parallel zu den Seiten 21 des Wärmeaustauschabschnitts 7 erstreckenden Seitenflächen des Gehäuses 2 weisen dabei die größten Flächen auf und werden durch das Mantelteil 11 gebildet. Die erste und zweite Stirnseite 12, 14, an denen die Anschlusselemente 10, 15 angeordnet sind, bilden die Seitenflächen mit den jeweils kleineren Flächen.

Eine Längsrichtung 16, die Vorschubrichtung beim Strangpressen der Wärmetauscherplatte 6, verläuft senkrecht zur axialen Richtung 19 und parallel zu den Seiten 21 des Wärmeaustauschabschnitts 7.

Die Längsrichtung 16 verläuft parallel zu dem Wärmeaustauschabschnitt 7 und parallel zu der ersten Stirnseite 12 und zweiten Stirnseite 14. Die Ummantelung 4 ist an der ersten Stirnseite 12 durch drei voneinander entlang der Längsrichtung 16 beabstandete Anschlusselemente 10, 15 gebildet, wobei zwischen den Anschlusselementen 10, 15 jeweils ein Zwischenraum 17 ausgebildet ist. An der ersten Stirnseite 12 sind zwei Zwischenräume 17 ausgebildet. Die Zwischenräume 17 sind entlang der Längsrichtung 16 durch das eine erste Anschlusselement 10 voneinander beabstandet angeordnet.

In jedem Zwischenraum 17 ist jeweils ein elektrischer Kontakt 18 angeordnet, über den die in dem Volumen 5 angeordneten Stapel 29 mit einem außerhalb des Gehäuses 2 angeordneten Stromkreis verbindbar sind.

Die zweiten Anschlusselemente 15 erstrecken sich entlang der Längsrichtung 16 über den Wärmeaustauschabschnitt 7 hinaus. Die Erstreckung des jeweiligen zweiten Anschlusselements 15 entlang der Längsrichtung 16 ist so ausgeführt, dass sie die Erstreckung der Stapel 29 entlang der Längsrichtung 16 gerade überdeckt.

Mit der Verbindung von Wärmetauscherplatte 6 und Mantelteil 11 ist das Gehäuse 2 der Batteriezelle 1 hergestellt. Das Gehäuse 2 ist, bei stoffschlüssiger Verbindung von Wärmetauscherplatte 6 und Mantelteil 11, einteilig ausgeführt, aber dabei immer aus mehreren Teilen, nämlich zumindest aus Wärmetauscherplatte 6 und Mantelteil 11, hergestellt.

Der jeweilige elektrische Kontakt 18 ist gegenüber dem Gehäuse 2 elektrisch isoliert. Der elektrische Kontakt 18 weist einen metallischen Rahmen 32 auf, der mit dem Gehäuse 2, z. B. stoffschlüssig, verbindbar ist bzw. verbunden werden kann. Die elektrische Kontaktierung des Stapels 29 erfolgt über einen elektrischen Leiter, der sich von dem Stapel 29 durch den elektrischen Kontakt 18 hin zu der Umgebung der Batteriezelle 1 erstreckt. Der elektrische Kontakt 18 ist gegenüber dem metallischen Rahmen 32 über eine Kontaktisolierung 25 elektrisch isoliert angeordnet. Der Kontakt 18 ist gegenüber den Stapeln 29 durch eine Stapelisolierung 26 elektrisch isoliert angeordnet.

Die Ableiter 33 erstrecken sich nur dort aus dem Stapel 29 bzw. der Isolierung 24 des Stapels 29 heraus, wo der Zwischenraum 17 bzw. wo der mit den Ableitern 33 zu kontaktierende elektrische Kontakt 18 bzw. elektrische Leiter angeordnet ist. Damit muss ein sonst erforderlicher, für die Ableiter 33 freizuhaltender Raum zwischen dem Stapel 29 und der ersten Stirnseite 12 bzw. der Ummantelung 4 nur im Bereich des Kontakts 18 freigehalten werden. Da in diesem Bereich der Zwischenraum 17 vorliegt, also gerade kein Anschlusselement 10, 15, kann das Anschlusselement 10, 15 direkt auf dem Stapel 29, also ohne vorzuhaltenden Spalt, angeordnet werden. Der jeweilige Kontakt 18 kann den für die Kontaktierung erforderlichen Bauraum zwischen Ableitern 33 und Kontakt 18 aufweisen, bzw. so angeordnet werden, dass dieser Bauraum vorliegt.

### Bezugszeichenliste

- 1: Batteriezelle
- 2: Gehäuse
- 3: Lage
- 4: Ummantelung
- 5: Volumen
- 6: Wärmetauscherplatte
- 7: Wärmeaustauschabschnitt
- 8: erster Anschluss
- 9: zweiter Anschluss
- 10: erstes Anschlusselement
- 11: Mantelteil
- 12: erste Stirnseite
- 13: Umfangsrichtung
- 14: zweite Stirnseite
- 15: zweites Anschlusselement
- 16: Längsrichtung
- 17: Zwischenraum
- 18: Kontakt
- 19: axiale Richtung
- 20: radiale Richtung
- 21: Seite
- 22: Kernteil
- 23: Mittelteil
- 24: Isolierung
- 25: Kontaktisolierung
- 26: Stapelisolierung
- 27: Klammer
- 28: Schweißnaht
- 29: Stapel
- 30: Hohlraum
- 31: Breite
- 32: Rahmen
- 33: Ableiter

## Patentansprüche

1. Batteriezelle (1), zumindest umfassend ein formfestes Gehäuse (2) und darin angeordnet eine Mehrzahl von aufeinander zumindest gestapelten Lagen (3), umfassend mindestens eine Anode und mindestens eine Kathode als Elektroden und zwischen den unterschiedlichen Elektroden einen Separator; wobei das Gehäuse (2) eine äußere Ummantelung (4) zur Ausbildung eines von dem Gehäuse (2) eingeschlossenen Volumens (5) sowie innerhalb des Volumens (5) eine mit der äußeren Ummantelung (4) verbundene Wärmetauscherplatte (6) umfasst, wobei die Wärmetauscherplatte (6) in einem Wärmeaustauschabschnitt (7) von einem Kühlfluid durchströmbar ist, wobei zumindest ein erster Anschluss (8) und ein zweiter Anschluss (9) für das Kühlfluid an mindestens einem ersten Anschlusselement (10) der Wärmetauscherplatte (6) angeordnet sind, das mit dem Wärmeaustauschabschnitt (7) einteilig verbunden ist und zumindest einen Teil der äußeren Ummantelung (4) bildet.

2. Batteriezelle (1) nach Patentanspruch 1, wobei der Wärmeaustauschabschnitt (7) und das mindestens eine erste Anschlusselement (10) einteilig als Druckgussteil, als Strangpressprofil oder als Schweißkonstruktion ausgeführt sind.

3. Batteriezelle (1) nach einem der vorhergehenden Patentansprüche, wobei die Ummantelung (4) zumindest ein Mantelteil (11) mit zumindest einer offenen ersten Stirnseite (12) umfasst, das die Lagen (3) und den Wärmeaustauschabschnitt (7) entlang einer Umfangsrichtung (13) vollumfänglich umschließt, wobei die erste Stirnseite (12) zumindest teilweise durch das mindestens eine erste Anschlusselement (10) verschlossen ist.

4. Batteriezelle (1) nach Patentanspruch 3, wobei das Mantelteil (11) eine offene zweite Stirnseite (14) umfasst, die durch mindestens ein zweites Anschlusselement (15), das mit dem Wärmeaustauschabschnitt (7) einteilig verbunden ist, zumindest teilweise verschlossen ist.

5. Batteriezelle (1) nach Patentanspruch 3 oder 4, wobei eine Längsrichtung (16) parallel zu dem Wärmeaustauschabschnitt (7) und parallel zu der zweiten Stirnseite (14) verläuft, wobei die Ummantelung (4) an zumindest einer der Stirnseiten (12, 14) durch mindestens zwei voneinander entlang der Längsrichtung (16) beabstandete Anschlusselemente (10, 15) gebildet ist, wobei zwischen den Anschlusselementen (10, 15) ein Zwischenraum (17) ausgebildet ist.

6. Batteriezelle (1) nach einem der Patentansprüche 3 bis 5, wobei zumindest an der ersten Stirnseite (12) oder an der zweiten Stirnseite (14) zwei Zwischenräume (17) ausgebildet sind.

7. Batteriezelle (1) nach Patentanspruch 5 oder 6, wobei zumindest ein elektrischer Kontakt (18) der Batteriezelle (1) in dem Zwischenraum (17) angeordnet ist.

8. Batteriezelle (1) nach einem der vorhergehenden Patentansprüche 3 bis 7, wobei zumindest eine Stirnseite (12, 14) ausschließlich durch ein Anschlusselement (10, 15) verschlossen ist.

9. Batteriezelle (1) nach einem der vorhergehenden Patentansprüche, wobei das zumindest eine Anschlusselemente (10, 15) stoffschlüssig mit dem Mantelteil (11) verbunden ist.

10. Batteriezelle (1) nach einem der vorhergehenden Patentansprüche, wobei das Mantelteil (11) ein Strangpressprofil ist.
